# EUROPÄISCHE PATENTANMELDUNG

(11) **EP 0 749 061 A2**
(43) Veröffentlichungstag der Anmeldung: **18.12.1996**
(21) Anmeldenummer: 96106690.9
(22) Anmeldetag: 26.04.1996
(51) Int. Cl.: G06F 1/16

(54) **Kombinierte Moduleinschubvorrichtung für tragbare Computer**

(30) Priorität: 14.06.1995 DE 29509509 U
(71) Anmelder: VOBIS MICROCOMPUTER AG, D-52146 Würselen (DE)
(72) Erfinder: Lieven, Theo, D-52146 Würselen (DE)
(74) Vertreter: Bauer, Wulf, Dr.

(57) **Zusammenfassung**

Die Erfindung zeigt eine kombinierte Moduleinschubvorrichtung für tragbare Computer (11) zur Erweiterung des tragbaren Computers (11) mittels Erweiterungsbaugruppen, Module (12) genannt. Als Module (12) können Erweiterungsbaugruppen verwendet werden, die von ihren Abmessungen etwa in der Größe eines Laufwerks einer Compact Disc liegen und alle für derartige räumlich größere Module (12) notwendigen Signale auf einer elektrischen Schnittstelle, Bus genannt, zusammengefaßt sind und als Steckkontakt (42) in einer von ihrer Form und Größe her normierten Einschubvorrichtung, die ein Gehäuse (43) hat, untergebracht sind.

## Beschreibung

Die Erfindung betrifft eine Moduleinschubvorrichtung mit zugehörigen Modulen, auch Erweiterungsbaugruppen genannt, für tragbare Computer wie z. B. Notebooks.

Bekannt sind Moduleinschubvorrichtungen für tragbare Computer, die es ermöglichen, Erweiterungsbaugruppen für den Computer auf einfache Art und Weise auszutauschen. Derartige Baugruppen sind z.B. als sogenannte PCMCIA-Technologie bekannt. In derartigen Erweiterungsbaugruppen können eine Reihe von Funktionen wie z.B. Modemschaltungen, Speichererweiterungen oder auch Festplattenspeicher untergebracht werden.

Hingegen ist es nicht möglich, diese Moduleinschubvorrichtungen für Vorrichtungen wie Akkumulatoren, welche für die tragbaren Computer eine wichtige Rolle spielen, Diskettenlaufwerke oder CD-ROM-Laufwerke zu nutzen, da zum einen der Bus-Anschluß dieser Moduleinschubvorrichtungen hierfür nicht ausgelegt ist, und zum anderen der Platzbedarf dieser Geräte die mechanischen Dimensionen bekannter Moduleinschubvorrichtungen sprengt.

Daher sind derartige Vorrichtungen entweder nicht austauschbar, also fest in einem tragbaren Computer installiert oder aber, wie im Falle von zusätzlichen Akkumulatoren, in einer separaten Einschubvorrichtung untergebracht, was jedoch den, im Falle der tragbaren Computer äußerst knapp bemessenen Platz unvorteilhafterweise weiter einschränkt.

Der Erfindung liegt daher die Aufgabe zugrunde auch für räumlich größere Einheiten, wie z.B. CD-ROMS, Diskettenlaufwerke und Akkumulatoren, eine platzsparende Lösung in austauschbarer Modulbauweise zu finden.

Diese Aufgabe wird erfindungsgemäß dadurch gelöst, daß eine kombinierte Moduleinschubvorrichtung zur Erweiterung des tragbaren Computers vorgesehen wird, die die Verwendung von Erweiterungsbaugruppen erlaubt, die von ihren Abmessungen in der Größenordnung eines Laufwerks einer Compact Disc liegen und die alle für derartige, räumlich größere Module notwendigen Signale auf einer elektrischen Schnittstelle (Bus) zusammefaßt und diesen als Steckkontakt in einer von Norm und Größe her standardisierten Einschubvorrichtung zur Verfügung stellt.

Eine Ausführungsform der vorliegenden Erfindung erlaubt es, daß als Module zum Einschub in die Moduleinschubvorrichtung Massenspeicherbaugruppen, wie etwa Diskettenlaufwerke, Fest- oder Wechselplattenlaufwerke oder CD-ROM-Laufwerke verwendet werden können.

Insbesondere können als Module zum Einschub in die Moduleinschubvorrichtung auch Akkumulatoren verwendet werden können. Eine weitere Ausführungsform der vorliegenden Erfindung ist dadurch gekennzeichnet, daß als Module zum Einschub in die Moduleinschubvorrichtung sowohl Massenspeicherbaugruppen, als auch Akkumulatoren verwendet werden können.

Darüberhinaus können in einer Ausführungsform nach der vorliegenden Erfindung als Module zum Einschub in die Moduleinschubvorrichtung sowohl Massenspeicherbaugruppen als auch Akkumulatoren sowie weitere durch ihre Bauart in der Größe eines Laufwerks einer Compact Disc liegende Baugruppen Verwendung finden.

Die nach der vorliegenden Erfindung Verwendung findenden, austauschbaren Akkumulatoren in Modulbauweise zum Betrieb von tragbaren Computern, sind von ihrer Bauweise, insbesondere ihrer Kontaktleiste und ihrer Abmessungen zum elektrischen Anschluß an den Computer, her so ausgelegt, daß sie in einer Moduleinschubvorrichtung verwendet werden können, in der auch Massenspeicherbaugruppen, (wie etwa Diskettenlaufwerke, Fest- oder Wechselplattenlaufwerke oder CD-ROM-Laufwerke), oder andere Erweiterungsbaugruppen verwendet werden.

Die nach der vorliegenden Erfindung Verwendung findenden, austauschbaren Massenspeicherbaugruppen in Modulbauweise zum Betrieb in tragbaren Computern sind von ihrer Bauweise, insbesondere ihrer Kontaktleiste her zum elektrischen Anschluß an den Computer, so ausgelegt, daß sie in einer Moduleinschubvorrichtung verwendet werden können, in der auch Akkumulatoren oder andere Erweiterungsbaugruppen verwendet werden.

Die nach der vorliegenden Erfindung Verwendung findenden austauschbaren Erweiterungsbaugruppen in Modulbauweise zum Betrieb in tragbaren Computern sind von ihrer Bauweise, insbesondere ihrer Kontaktleiste zum elektrischen Anschluß an den Computer, her so ausgelegt, daß sie in einer Moduleinschubvorrichtung verwendet werden können, in der auch Massenspeicherbaugruppen, (wie etwa Diskettenlaufwerke, Fest- oder Wechselplattenlaufwerke oder CD-ROM-Laufwerke), oder Akkumulatoren verwendet werden.

Besonders vorteilhaft ist, daß während des Betriebs des Computers zwei Module ausgetauscht werden können, z. B. ein Modul eines Diskettenlaufwerks gegen ein Modul mit einem CD-ROM-Laufwerk. Entscheidend ist dabei, daß das Laufwerk aktuell beim Austausch gerade nicht angesprochen wird. Hierzu kann eine Anzeige, z. B. LED, am Gehäuse des Moduls von außen sichtbar (auch im eingesteckten Zustand im Slot) vorgesehen sein.

Eine Ausführungsform der Belegung des Bus zum Anschluß der Module an den tragbaren Computer ergibt sich aus der folgenden Verteilung der Daten- und Steuerleitungen:
- 16: Datenleitungen
- 3: Adreßleitungen
- 13: Steuersignale zur Ansteuerung des Diskettenlaufwerkes
- 2: Leitungen Versorgungsspannung
- 4: Leitungen Masse
- 3: nicht belegte Leitungen
- 9: Steuerleitungen zur Ansteuerung eines CD-ROM Laufwerkes
- 2: Signalleitungen für Audio, z.B. rechter und linker Kanal

Insbesondere kann folgende Leitungsbelegung vorgenommen werden:

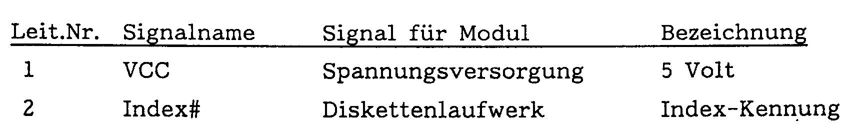

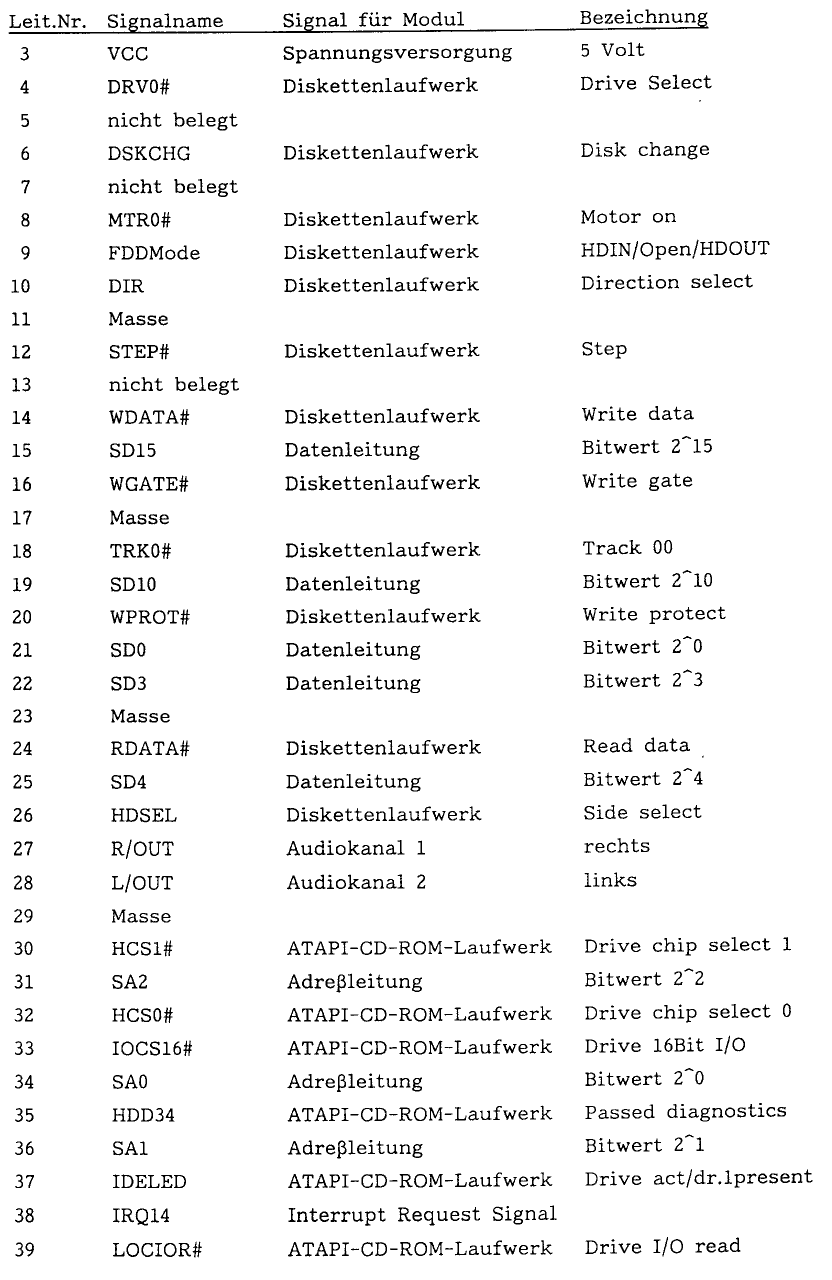

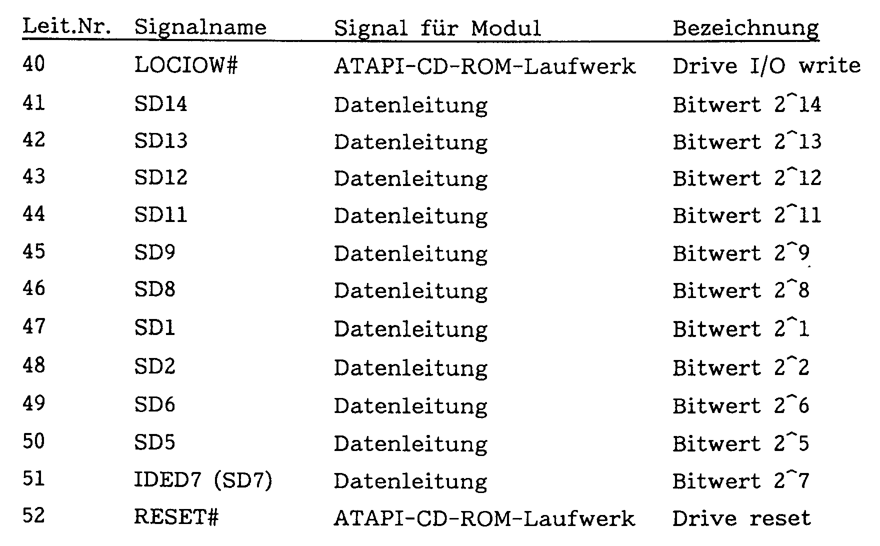

Die vorliegende Erfindung bietet somit den Vorteil, daß auch von den Abmessungen her größere Module, wie z.B CD-ROM Laufwerke oder Akkumulatoren, in einer Einschubvorrichtung (Slot) gegeneinander ausgetauscht werden können, was eine enorme Platzersparnis erbringt. Diese Platzersparnis ist insbesondere für tragbare Computer wichtig, da hier der zur Verfügung stehende Raum besonders knapp bemessen ist. Bei Einsatz einer Vorrichtung nach der vorliegenden Erfindung bleibt somit wesentlich mehr Raum für die nicht austauschfähigen Kernkomponenten des tragbaren Computers bei gleichzeitiger Vielfalt seiner Verwendungsmöglichkeiten.

Im folgenden werden Ausführungsbeispiele besprochen und anhand der beigefügten Zeichnung erläutert. In dieser zeigen:
Fig. 1 eine perspektivische Darstellung eines tragbaren Computers mit eingeschobenem Modul zur Erweiterung, von der Rückseite und mit Blick auf die Unterseite her gesehen,
Fig. 2 den tragbaren Computer in einer Darstellung gemäß Fig. 1, mit einem Modul, welches ein Stück weit aus dem Slot herausgezogen ist,
Fig. 3 ein Akkumulator Modul nach der vorliegenden Erfindung, und
Fig. 4 ein CD-ROM Laufwerkmodul nach der vorliegenden Erfindung.

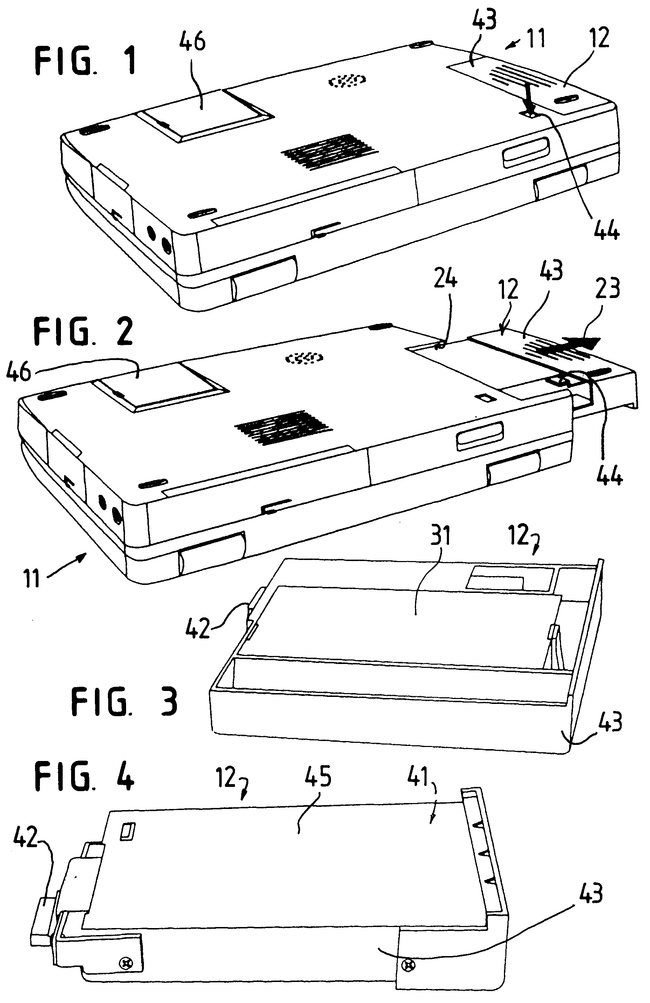

In Fig. 1 ist zu sehen, wie ein Erweiterungsmodul 12 in einer Ausführungsform nach der vorliegenden Erfindung von der Seite her in einen tragbaren Computer 11 eingeschoben ist. Dieser ist zusammengeklappt.

Fig. 2 zeigt, wie das Erweiterungsmodul bzw. Modul 12 aus dem tragbaren Computer 11 entfernt werden kann. Es ist in der Darstellung bereits ein Stück weit aus einem Slot 24 des tragbaren Computers 11 herausgenommen.

Im Gehäuse des Computers ist ein Slot 24 (eine Ausnehmumg) für ein Modul 12 vorgesehen, an der tiefsten Stelle befindet sich eine Vielfachsteckvorrichtung, die mit einer entsprechenden Steckvorrichtung 42, welche an jedem Modul 12 vorgesehen ist, zusammenwirkt.Um ein Modul 12 zu entnehmen, schaltet man in einer Ausführung zunächst den tragbaren Computer 11 aus, dann wird das Modul 12 in Pfeilrichtung 23 herausgezogen. Hiernach kann man ein beliebiges, anderes, passendes Modul 12 entgegen der Pfeilrichtung 23 wieder in den Slot 24 des tragbaren Computer 11 hineinführen. Daraufhin kann der tragbare Computer 11 wieder in Betrieb genommen werden.

Fig. 3 zeigt eine perspektivische Darstellung eines Moduls 12 mit einem Akkumulator 31 in Modulbauweise in einer Ausführungsform nach der vorliegenden Erfindung. Fig. 4 zeigt ein perspektivische Darstellung eines Moduls 12 mit einem CD-ROM-Laufwerks 41 in in einer weiteren Ausführungsform der vorliegenden Erfindung, von einer Längsseite her gesehen. Wie aus den beiden letzteren Figuren ersichtlich ist, hat das Modul 12 jeweils ein Gehäuse 43 aus Kunststoff, das die jeweilige Funktionseinheit (Akkumulator 31 bzw. CD-ROM-Laufwerk 41 usw.) aufnimmt und hält. Das CD-ROM-Laufwerk 41 ist durch einen Deckel 45 des Gehäuses 43 abgedeckt, der Akkumulator 31 ist dagegen nach oben nicht abgedeckt und daher von oben sichtbar.

Das Modul 12 kann sowohl im geschlossenen Zustand des Computers 11 (wie dargestellt), als auch im geöffneten, betriebsbereiten Zustand entnommen bzw. eingeführt werden. An der Unterseite des Computers 11 ist eine Taste 44 vorgesehen. Sie wird gedrückt, um das Modul 12 zu entriegeln, so daß es herausgezogen werden kann. Beim Einschieben des Moduls 12 in den Slot 45 rastet die Verriegelung selbsttätig ein.

Schließlich ist an der Unterseite noch eine Abdeckung 46 vorgesehen, unter ihr befindet sich der RAM Speicher (DIMM Bausteine) des Computers 11. Durch Entfernen dieser Abdeckung 46 kann der tragbare Computer 11 auf andere RAM Speicherwerte auf- oder abgerüstet werden.

## Patentansprüche

1. Kombinierte Moduleinschubvorrichtung für tragbare Computer (11) zur Erweiterung des tragbaren Computers (11) mittels Erweiterungsbaugruppen, Module (12) genannt, dadurch gekennzeichnet, daß als Module (12) Erweiterungsbaugruppen verwendet werden können, die von ihren Abmessungen etwa in der Größe eines Laufwerks einer Compact Disc liegen und alle für derartige räumlich größere Module (12) notwendigen Signale auf einer elektrischen Schnittstelle, Bus genannt, zusammengefaßt sind und als Steckkontakt (42) in einer von ihrer Form und Größe her normierten Einschubvorrichtung, die ein Gehäuse (43) hat, untergebracht sind.

2. Vorrichtung nach Anspruch 1, dadurch gekennzeichnet, daß als Module (12) zum Einschub in die Moduleinschubvorrichtung Massenspeicherbaugruppen, wie etwa Diskettenlaufwerke, Fest- oder Wechselplattenlaufwerke oder CD-ROM-Laufwerke (41) verwendet werden können.

3. Vorrichtung nach Anspruch 1, dadurch gekennzeichnet, daß als Module (12) zum Einschub in die Moduleinschubvorrichtung auch Akkumulatoren (31) verwendet werden können.

4. Vorrichtung nach Anspruch 1, dadurch gekennzeichnet, daß als Module (12) zum Einschub in die Moduleinschubvorrichtung sowohl Massenspeicherbaugruppen als auch Akkumulatoren (31) verwendet werden können.

5. Vorrichtung nach Anspruch 1, dadurch gekennzeichnet, daß als Module (12) zum Einschub in die Moduleinschubvorrichtung sowohl Massenspeicherbaugruppen als auch Akkumulatoren (31) sowie weitere durch ihre Bauart in der Größe des Laufwerks (41) einer Compact Disc liegende Baugruppen untergebracht werden können.

6. Austauschbare Akkumulatoren (31) in Modulbauweise zum Betrieb von tragbaren Computern, dadurch gekennzeichnet, daß sie von ihrer Bauweise, insbesondere ihrer Kontaktleiste zum elektrischen Anschluß an den Computer (11), so ausgelegt sind, daß sie in einer Moduleinschubvorrichtung verwendet werden können, die ein Gehäuse (43) hat, in dem anstelle des Akkumulators (31) eine Massenspeicherbaugruppe, (wie etwa Diskettenlaufwerk, ein Fest- oder Wechselplattenlaufwerk oder ein CD-ROM-Laufwerk (41), oder eine andere Erweiterungsbaugruppe untergebracht werden kann.

7. Austauschbare Massenspeicherbaugruppen in Modulbauweise zum Betrieb in tragbaren Computern (11), dadurch gekennzeichnet, daß sie von ihrer Bauweise, insbesondere ihrer Kontaktleiste zum elektrischen Anschluß an den Computer (11), so ausgelegt sind, daß sie in einer Moduleinschubvorrichtung verwendet werden können, die ein Gehäuse (43) hat, in dem auch Akkumulatoren (31), oder eine andere Erweiterungsbaugruppe untergebracht werden können.

8. Austauschbare Erweiterungsbaugruppen in Modulbauweise zum Betrieb in tragbaren Computern, dadurch gekennzeichnet, daß sie von ihrer Bauweise, insbesondere ihrer Kontaktleiste zum elektrischen Anschluß an den Computer (11), so ausgelegt sind, daß sie in einer Moduleinschubvorrichtung verwendet werden können, die ein Gehäuse (43) hat, in dem auch eine Massenspeicherbaugruppen, (wie etwa Diskettenlaufwerk, Fest- oder Wechselplattenlaufwerk oder CD-ROM-Laufwerk (41), oder mindestens ein Akkumulator (31) untergebracht werden können.
